# EUROPÄISCHE PATENTSCHRIFT

(11) **EP 3 155 275 B1**
(45) Veröffentlichungstag und Bekanntmachung des Hinweises auf die Patenterteilung: **12.12.2018**
(21) Anmeldenummer: 15820459.4
(22) Anmeldetag: 16.12.2015
(51) Int. Cl.: F16C 29/06, F16C 29/00, F16C 33/64

(54) **VERBUNDLINEARFÜHRUNG MIT FIXIERUNGSMITTEL**
COMPOUND LINEAR GUIDE HAVING A FASTENING MEANS
GUIDAGE LINÉAIRE COMPOSITE POURVU DE MOYENS DE FIXATION

(30) Priorität: 18.12.2014 DE 102014119113
(43) Veröffentlichungstag der Anmeldung: 19.04.2017
(73) Patentinhaber: Weiss GmbH, 74722 Buchen (Odw.) (DE)
(72) Erfinder: GREINER, Heinz, 73061 Ebersbach (DE)
(74) Vertreter: Manitz Finsterwald Patentanwälte PartmbB
(86) Internationale Anmeldenummer: PCT/EP2015/079994
(87) Internationale Veröffentlichungsnummer: WO 2016/096987

(56) Entgegenhaltungen:
- EP-A2- 2 110 571
- DE-A1- 2 757 418
- DE-A1- 4 417 136
- US-A- 3 178 620

## Beschreibung

Die vorliegende Erfindung betrifft ein Transfersystem zum Transport von Objekten mit einer Führungsschiene, die einen Leichtmetallgrundkörper und mindestens ein mit dem Leichtmetallgrundkörper verbundenes Führungselement mit einer Führungsfläche aufweist, einem Schlitten zur Aufnahme zumindest eines Objektes, und einem Lager, das den Schlitten linear verschiebbar an der Führungsschiene lagert.

Ein Transfersystem der eingangs genannten Art wird beispielsweise in der Automatisierungstechnik verwendet, um Objekte von einem Ort zu einem anderen Ort zu transportieren, beispielsweise von einem Fertigungsschritt zum nächsten. Hierzu werden die Objekte auf Schlitten positioniert und die Schlitten entlang einer Führungsschiene verfahren.

Es ist bekannt, Führungsschienen als Verbundbauteil herzustellen. Bei solchen sogenannten Verbundlinearführungen ist der Körper beispielsweise aus Leichtmetall, etwa Aluminium, gefertigt. Drähte oder Wellen aus Stahl, die in den Körper eingebracht werden, z.B. durch Einlegen oder Einwalzen, dienen als Führungselemente. Solche bekannten Verbundlinearführungen erweisen sich aufgrund ihrer geringen Verwindungssteifigkeit und geringer Präzision insbesondere für Anwendungen mit Kugelumlaufführungen als eher ungeeignet. Dabei bezieht sich die geringe Präzision vor allem auf die unzureichende Parallelität der Führungselemente.

Es ist auch bekannt, Führungsschienen im Wesentlichen vollständig aus Stahl herzustellen. Diese sind in der Regel - was die Bearbeitungsgenauigkeit angeht - besser als bekannte Verbundlinearführungen. Sie sind jedoch mit dem Nachteil behaftet, dass sie sehr schwer und teuer in der Herstellung sind.

Aus der DE 44 17 136 A1 ist ein Transfersystem gemäß dem Oberbegriff des Anspruchs 1 bekannt. Aus der DE 27 57 418 A1 ist ein elektromagnetisches Spannzeug zum Einspannen von Werkstücken bekannt.

Ausgehend vom Stand der Technik liegt der Erfindung die Aufgabe zugrunde, ein Transfersystem zu schaffen, das vergleichsweise leicht und kostengünstig herstellbar ist und das sich im Vergleich zu bekannten Stahlführungsschienen mit gleichwertiger Präzision fertigen und bearbeiten lässt. Zusätzlich liegt der Erfindung die Aufgabe zugrunde, ein entsprechendes Bearbeitungsverfahren bereitzustellen.

Die Aufgabe wird gelöst durch ein Transfersystem zum Transport von Objekten mit den Merkmalen des Anspruchs 1 und insbesondere dadurch, dass die Führungsschiene mindestens ein magnetisches Fixierungsmittel aufweist, das ein temporäres Befestigen der Führungsschiene mittels einer Magnetspannvorrichtung ermöglicht.

Die weitere Aufgabe der Erfindung wird durch ein Verfahren zum Bearbeiten eines Transfersystems mit den Merkmalen des Anspruchs 10 gelöst.

Der Erfindung liegt der allgemeine Gedanke zugrunde, die Führungsschiene auf möglichst einfache Weise verspannungsfrei einzuspannen, um das Führungselement im in den Leichtmetallgrundkörper eingebetteten Zustand bearbeiten zu können. Hierfür ist an der Führungsschiene mindestens ein magnetisches Fixierungsmittel vorgesehen, um die Führungsschiene zur Bearbeitung magnetisch spannen zu können.

Vorteilhafte Ausbildungen der Erfindung sind den Unteransprüchen, der Beschreibung und den Zeichnungen zu entnehmen.

Gemäß einer Ausführungsform ist das Fixierungsmittel flächig ausgebildet. Flächig bedeutet in diesem Zusammenhang, dass die Fläche des Fixierungsmittels, die in Kontakt mit der Magnetspannvorrichtung kommt, im Wesentlichen eben ist. Dies hat den Vorteil, dass eine gute Kraftübertragung zwischen der Magnetspannvorrichtung und dem Fixierungsmittel gewährleistet werden kann.

Ferner kann das Fixierungsmittel an zumindest einer Außenseite der Führungsschiene angebracht sein. Hierdurch wird ebenfalls eine direkte Kraftübertragung zwischen Magnetspannvorrichtung und Fixierungsmittel ermöglicht.

Das Fixierungsmittel kann eine von der Außenseite der Führungsschiene beabstandete Anlageebene definieren. Diese Anlageebene kann zur Definition der Lage der Führungsschiene bezüglich eines Bezugssystems der Magnetspannvorrichtung verwendet werden, um eine präzise computergesteuerte Bearbeitung der Führungsschiene zu ermöglichen.

Insbesondere ist die Anlageebene - ob beabstandet von der Außenseite der Führungsschiene oder mit dieser fluchtend - auch in endmontiertem Zustand der Schiene für ihre korrekte Positionierung maßgeblich.

Gemäß einer Ausführungsform ist jeweils mindestens ein Fixierungsmittel an zwei, insbesondere geneigt zueinander angeordneten Außenseiten der Führungsschiene vorgesehen. Dies hat den Vorteil, dass - bei geeigneter Ausgestaltung der Magnetspannvorrichtung - die Führungsschiene in zwei verschiedenen Dimensionen zuverlässig fixiert werden kann. Zur einfachen Positionierung der Führungsschiene können die Fixierungsmittel beispielsweise an senkrecht zueinander liegenden Außenseiten der Führungsschiene vorgesehen sein.

Um eine ungewünschte Bewegung des Schlittens quer zur Fahrtrichtung zu verhindern, kann die Führungsschiene den Schlitten zumindest teilweise von außen umgreifen oder der Schlitten die Führungsschiene zumindest teilweise von außen umgreifen.

Mindestens ein Fixierungsmittel kann in eine Nut eingelassen sein, die vorzugsweise trapezförmig ausgebildet ist, um eine zuverlässige, insbesondere formschlüssige Verbindung zwischen dem Fixierungsmittel und dem Leichtmetallgrundkörper herzustellen.

Um eine hohe magnetische Anziehungskraft durch die Magnetspannvorrichtung zu ermöglichen, kann das Fixierungsmittel aus einem ferromagnetischen oder ferrimagnetischen Material, vorzugsweise Stahl oder Eisen, ausgebildet sein.

Falls das Fixierungsmittel derart angeordnet ist, dass es in einem endmontierten Zustand zumindest teilweise eine Anlagefläche oder Montagefläche bildet, so geht die Verwendung von Stahl mit dem Vorteil einer robusten, präzisen und zuverlässigen Verbindbarkeit der Schiene mit den sie tragenden Komponenten einher.

Zur Reibungsminimierung zwischen Führungsschiene und Schlitten kann das Lager mindestens ein Wälzlager, insbesondere nach Art der Kugelumlaufführung, umfassen, das mit der Führungsfläche des Führungselements zusammenwirkt.

Zur präziseren Führung des Schlittens kann dieser mindestens ein Führungsteil aufweisen, das dem Führungselement einer entsprechenden Führungsschiene gegenüber liegt. Ein solches Führungsteil kann durch Einwalzen oder Einkleben in eine, insbesondere trapezförmige, Nut des Schlittens eingebracht sein. In ähnlicher Weise kann das Führungselement in die Führungsschiene integriert sein. Alternativ kann das Führungsteil jedoch auch integral an dem Schlitten ausgebildet sein. Die integrale Bauweise hat den Vorteil, dass kein zusätzlicher Bearbeitungsschritt zum Einbringen des Führungsteils in die Nut des Schlittens nötig ist. Analoges gilt für das Führungselement, das einstückig mit dem Leichtmetallgrundkörper der Führungsschiene ausgebildet sein kann.

Die Erfindung betrifft, wie zuvor beschrieben, auch ein Verfahren zum Bearbeiten eines Transfersystems zum Transport von Objekten. Das erfindungsgemäße Verfahren umfasst die Schritte:
Bereitstellen einer Führungsschiene, die einen Leichtmetallkörper und ein magnetisches Fixierungsmittel umfasst, das eine temporäre Befestigung der Führungsschiene mittels einer Magnetspannvorrichtung ermöglicht, Fixieren der Führungsschiene mittels der Magnetspannvorrichtung in oder an einer Bearbeitungsvorrichtung, Bearbeiten der Führungsschiene, insbesondere eines zur Lagerung eines Schlittens an der Führungsschiene vorgesehenen Führungselements, und Lösen der Führungsschiene. Dieses Verfahren hat den Vorteil, dass ein einfaches, verspannungsfreies Spannen der Führungsschiene und somit ein präzises Bearbeiten der Führungsschiene in einem wohldefinierten Zustand möglich ist. Die Schiene ist nach der Bearbeitung auch schnell zu lösen, wodurch die Prozesszeit, die zum Bearbeiten des Führungselements benötigt wird, gesenkt werden kann.

Das Bearbeiten kann dabei ein Schleifen einer Führungsfläche des Führungselements umfassen. Es sind aber auch andere Bearbeitungsschritte wie beispielsweise Bohren von Löchern, Gewindeschneiden, Fräsen einer Nut, Anschweißen oder Angießen eines Teils, Beschichtung einer Oberfläche oder ähnliche Bearbeitungsschritte möglich.

Das Bearbeiten kann alternativ oder zusätzlich ein Einbringen des Führungselements umfassen. Beispielsweise kann das Führungselement in den Leichtmetallgrundkörper durch Einwalzen oder Einkleben eingebracht werden.

Das Fixieren der Führungsschiene kann mittels eines oder mehrerer Elektromagneten der Magnetspannvorrichtung vorgenommen werden. Dies hat den Vorteil, dass die Magnetspannvorrichtung auf einfache Weise an- und ausgeschaltet werden kann. Alternativ oder zusätzlich kann die Fixierung der Führungsschiene mittels eines Permanentmagneten vorgenommen werden, wodurch bei der alleinigen Benutzung von Permanentmagneten ein Anschluss an das Stromnetz nicht mehr von Nöten ist.

Nachfolgend wird die Erfindung anhand von rein beispielhaften Ausführungsformen unter Bezugnahme auf die beigefügten Zeichnungen beschrieben. Es zeigen:
- Fig. 1: eine Schnittansicht einer ersten Ausführungsform des erfindungsgemäßen Transfersystems;
- Fig. 2: eine Schnittansicht einer Führungsschiene gemäß einer zweiten Ausführungsform;
- Fig. 3: eine Schnittansicht einer Führungsschiene gemäß einer dritten Ausführungsform;
- Fig. 4: eine Schnittansicht einer Führungsschiene gemäß einer vierten Ausführungsform; und
- Fig. 5: ein Ablaufdiagramm einer Ausführungsform des erfindungsgemäßen Verfahrens zum Bearbeiten eines Transfersystems.

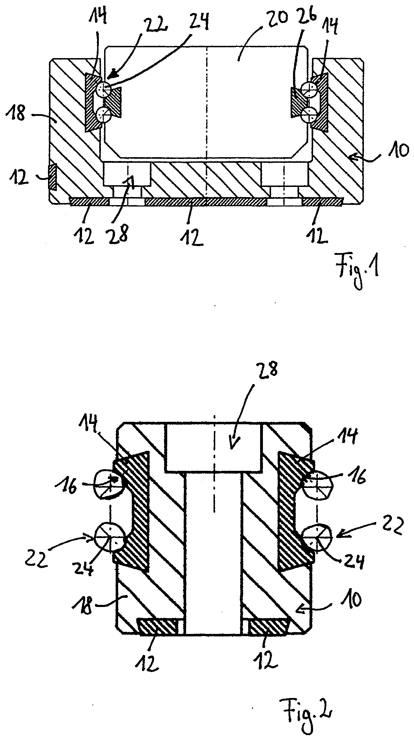

Die Figuren 1 bis 4 zeigen verschiedene Ausführungsformen einer Führungsschiene 10, die mit einem Fixierungsmittel 12 zum Fixieren der Führungsschiene 10 an einer nicht gezeigten Magnetspannvorrichtung ausgestattet sind. Des Weiteren sind die Führungsschienen 10 jeweils mit zwei Führungselementen 14 ausgestattet, die jeweils eine Führungsfläche 16 aufweisen. Jedes Fixierungsmittel 12 und Führungselement 14 ist an einem Leichtmetallgrundkörper 18 angebracht, der nicht magnetisch ist.

Fig. 1 zeigt eine Ausführungsform, bei der die Führungsschiene 10 eine U-Form aufweist und einen Schlitten 20 von außen teilweise umgreift. Der Schlitten 20, auf dem das zu transportierende Objekt angeordnet wird, ist mittels eines Lagers 22 linear verschiebbar an der Führungsschiene 10 gelagert. Das Lager 22 umfasst mehrere Wälzkörper 24, die zwischen dem führungsschienenseitigen Führungselement 14 und einem schlittenseitigen Führungsteil 26 angeordnet sind und die mit der Führungsfläche 16 in Kontakt stehen. Das Führungselement 14, das Führungsteil 26 sowie die Fixierungsmittel 12 sind in trapezförmigen Nuten, die in dem Leichtmetallgrundkörper 18 beziehungsweise in dem Schlitten 20 ausgeformt sind, eingelassen und somit formschlüssig fixiert.

Die Fixierungsmittel 12 haben eine Höhe H, die größer ist als eine Tiefe T der jeweiligen Nut. Dadurch stehen die Fixierungsmittel 12 aus der Führungsschiene 10 hervor. Sind mehrere Fixierungsmittel 12 an einer Fläche angebracht, liegen deren freiliegende Flächen in einer Ebene. Wie in Fig. 1 zu sehen ist, kann seitlich ein zusätzliches Fixierungsmittel 12 angebracht werden, um eine genauere Positionierung der Führungsschiene 10 auf einer nicht gezeigten Magnetspannvorrichtung zu gewährleisten.

In der Führungsschiene 10 sind ferner Senkbohrungen 28 vorhanden, um die Führungsschiene 10 beispielsweise auf einem nicht gezeigten Gestell vor Ort festzuschrauben.

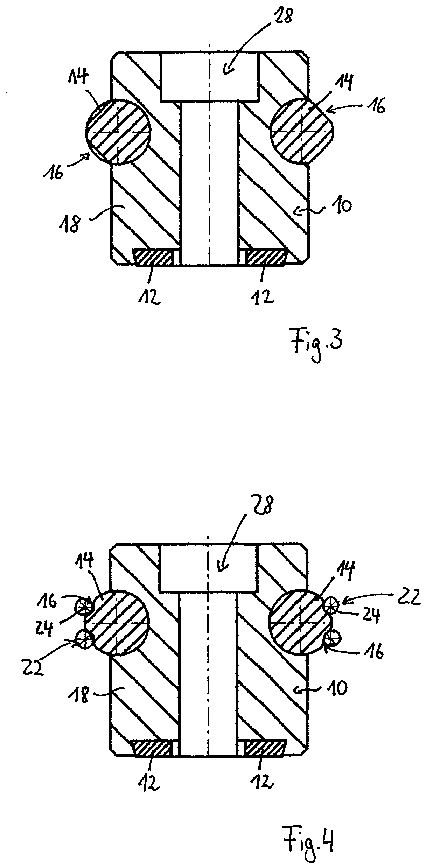

Die in den Figuren 2 bis 4 gezeigten Ausführungsformen der Führungsschiene 10 werden von einem nicht gezeigten Schlitten von außen umgriffen. Die Führungselemente 14 liegen hierzu auf gegenüberliegenden Außenflächen der Führungsschiene 10. Diese Ausführungsformen unterscheiden sich voneinander im Wesentlichen durch die Querschnittsform der Führungselemente 14. Während das in Fig. 2 gezeigte Führungselement 14 eine trapezförmige Grundform mit einer Ausnehmung zur Aufnahme von Wälzkörpern 24 aufweist, weisen die Führungselemente 14 der in Fig. 3 und 4 gezeigten Ausführungsformen eine im Wesentlichen kreisförmige Grundform auf. Zur Führung von Wälzkörpern 24 können Fasen (Fig. 3) oder Kerben (Fig. 4) an dem im Wesentlichen kreisförmigen Profil ausgeformt sein.

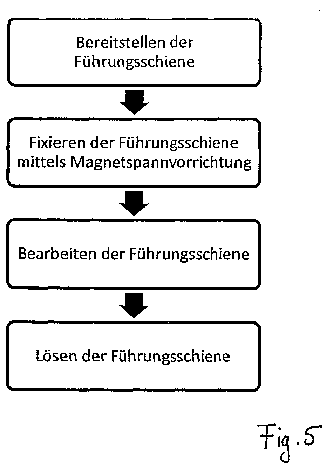

Fig. 5 zeigt ein Ablaufdiagramm für ein Verfahren zum Bearbeiten eines Transfersystems zum Transport von Objekten. In einem ersten Schritt wird eine Führungsschiene 10 bereitgestellt. Die Führungsschiene 10 umfasst einen Leichtmetallgrundkörper 18 und ein magnetisches Fixierungsmittel 12. Das Fixierungsmittel 12 ermöglicht es, die Führungsschiene 10 mittels einer nicht gezeigten Magnetspannvorrichtung temporär zu befestigen, d.h. zu fixieren. In einem zweiten Schritt wird die Führungsschiene 10 mittels der Magnetspannvorrichtung in oder an einer Bearbeitungsvorrichtung fixiert. Hierzu wird, beispielsweise durch einen oder mehrere Magneten, insbesondere Elektromagneten, ein Magnetfeld erzeugt, welches mit dem magnetischen Fixierungsmittel 12 zusammenwirkt und für eine feste, kraftschlüssige Verbindung zwischen einer Bearbeitungsvorrichtung und der Führungsschiene 10 sorgt.

Anschließend wird in einem dritten Schritt die Führungsschiene 10 bearbeitet. Dieser Schritt kann das Einbringen eines Führungselements 14, das Schleifen einer Führungsfläche 16 des Führungselements 14 sowie zusätzliche und/oder alternative Bearbeitungsschritte umfassen. Nach Abschluss der Bearbeitung wird die Führungsschiene 10 durch eine Inaktivierung der Magnetspannvorrichtung, beispielsweise durch ein Ausschalten des/der Elektromagneten, wieder von der Bearbeitungsvorrichtung gelöst. Nun kann ein anderer Abschnitt der Führungsschiene 10 oder ein anderes Bauteil bearbeitet werden.

Durch das zuvor beschriebene Verfahren ist es möglich, die Führungsschiene 10 zu bearbeiten, ohne dass sich diese durch punktuelle Belastungen, wie sie bei in bekannter Weise eingespannten Verbundlinearführungen vorkommen, verspannt oder gar verformt. Wird die Führungsschiene 10 anschließend in einem Transfersystem verbaut, ist sichergestellt, dass sie exakt so ausgerichtet ist, wie sie es während der Bearbeitung war. Dies ist insbesondere dann von Bedeutung, wenn der Schritt der Bearbeitung die Bearbeitung des Führungselements 14, insbesondere der Führungsfläche 16 umfasst. Letztlich wird also der passgenaue Einbau der Führungsschiene 10 erheblich vereinfacht. Eine Nachjustierung der Schiene 10 ist bei der Montage in der Regel nicht mehr erforderlich.

Während hier die Bearbeitung einer Führungsschiene 10 und ein nachträgliches Anbringen der Führungsschiene 10 an einem Transfersystem beschrieben ist, ist auch denkbar, ein gesamtes Modul, bestehend aus mehreren untereinander verbundenen Führungsschienen 10, mit Hilfe des beschriebenen Verfahrens zu bearbeiten.

Zusammenfassend kann man also sagen, dass durch das verspannungs- bzw. verwindungsfreie temporäre Befestigen der Führungsschiene 10, das durch das mindestens eine magnetische Fixierungsmittel 12 ermöglicht wird, unter anderem sichergestellt ist, dass die mindestens eine Führungsfläche 16 sowohl in einem Bearbeitungszustand wie auch in einem Verwendungszustand in gleicher oder zumindest wohldefinierter Lage zu einer Referenzfläche bzw. zu einem Bezugssystem steht. Dadurch werden die Bearbeitung der Führungsschiene 10 erheblich vereinfacht und die Präzision der für die Führung des Schlittens 20 maßgeblichen Komponenten erhöht.

### Bezugszeichenliste

- 10: Führungsschiene
- 12: Fixierungsmittel
- 14: Führungselement
- 16: Führungsfläche
- 18: Leichtmetallgrundkörper
- 20: Schlitten
- 22: Lager
- 24: Wälzkörper
- 26: Führungsteil
- 28: Senkbohrung

## Patentansprüche

1. Transfersystem zum Transport von Objekten, umfassend:
eine Führungsschiene (10), die einen Leichtmetallgrundkörper (18) und mindestens ein mit dem Leichtmetallgrundkörper (18) verbundenes Führungselement (14) mit einer Führungsfläche (16) aufweist,
einen Schlitten (20) zur Aufnahme zumindest eines Objektes, und
ein mit dem Führungselement (14) zusammenwirkendes Lager (22), das den Schlitten (20) linear verschiebbar an der Führungsschiene (10) lagert,
**dadurch gekennzeichnet, dass**
die Führungsschiene (10) zusätzlich mindestens ein magnetisches Fixierungsmittel (12) aufweist, das ein temporäres Befestigen der Führungsschiene (10) mittels einer Magnetspannvorrichtung ermöglicht, insbesondere zur Bearbeitung der Führungsfläche (16).

2. Transfersystem nach Anspruch 1,
**dadurch gekennzeichnet, dass**
das Fixierungsmittel (12) flächig ausgebildet ist.

3. Transfersystem nach Anspruch 1 oder 2,
**dadurch gekennzeichnet, dass**
das Fixierungsmittel (12) an zumindest einer Außenseite der Führungsschiene (10) angebracht ist.

4. Transfersystem nach Anspruch 3,
**dadurch gekennzeichnet, dass**
das Fixierungsmittel (12) eine von der Außenseite der Führungsschiene (10) beabstandete Anlageebene definiert.

5. Transfersystem nach zumindest einem der vorstehenden Ansprüche,
**dadurch gekennzeichnet , dass**
jeweils mindestens ein Fixierungsmittel (12) an zwei, insbesondere geneigt zueinander angeordneten, Außenseiten der Führungsschiene (10) vorgesehen ist.

6. Transfersystem nach zumindest einem der vorstehenden Ansprüche,
**dadurch gekennzeichnet , dass**
die Führungsschiene (10) den Schlitten (20) zumindest teilweise von außen umgreift oder dass der Schlitten (20) die Führungsschiene (10) zumindest teilweise von außen umgreift.

7. Transfersystem nach zumindest einem der vorstehenden Ansprüche,
dadurch **gekennzeichne**t , dass
mindestens ein Fixierungsmittel (12) in einer Nut eingelassen ist, die vorzugsweise trapezförmigen ausgebildet ist.

8. Transfersystem nach zumindest einem der vorstehenden Ansprüche,
**dadurch gekennzeichnet, dass**
das Fixierungsmittel (12) aus einem ferromagnetischen oder ferrimagnetischen Material, vorzugsweise Stahl oder Eisen, ausgebildet ist.

9. Transfersystem nach zumindest einem der vorstehenden Ansprüche,
**dadurch gekennzeichnet, dass**
das Lager (22) mindestens ein Wälzlager, insbesondere nach Art der Kugelumlaufführung, umfasst.

10. Verfahren zum Bearbeiten eines Transfersystems zum Transport von Objekten, nach zumindest einem der vorstehenden Ansprüche, umfassend:
Bereitstellen einer Führungsschiene (10), die einen Leichtmetallgrundkörper (18) und ein magnetisches Fixierungsmittel (12) umfasst, das eine temporäre Befestigung der Führungsschiene (10) mittels einer Magnetspannvorrichtung ermöglicht,
Fixieren der Führungsschiene (10) mittels der Magnetspannvorrichtung in oder an einer Bearbeitungsvorrichtung,
Bearbeiten der Führungsschiene (10), insbesondere eines zur Lagerung eines Schlittens (20) an der Führungsschiene (10) vorgesehenen Führungselements (14), und
Lösen der Führungsschiene (10).

11. Verfahren gemäß Anspruch 10,
wobei das Bearbeiten ein Schleifen einer Führungsfläche (16) des Führungselements (14) umfasst.

12. Verfahren gemäß Anspruch 10 oder 11,
wobei das Bearbeiten ein Einbringen des Führungselements (14) in die Führungsschiene (10) umfasst, insbesondere durch Einwalzen oder Einkleben.

13. Verfahren gemäß Anspruch 10, 11 oder 12,
wobei das Fixieren der Führungsschiene (10) mittels eines Elektromagneten der Magnetspannvorrichtung vorgenommen wird.

## Claims

1. A transfer system for the transport of objects comprising:
a guide rail (10) which has a light metal base body (18) and at least one guide element (14) connected to the light metal base body (18) and having a guide surface (16);
a slide (20) for the reception of at least one object; and
a bearing (22) which cooperates with the guide element (14) and which linearly displaceably supports the slide (20) at the guide rail (10),
**characterized in that**
the guide rail (10) additionally has at least one magnetic fixing means (12) which enables a temporary fastening of the guide rail (10) by means of a magnetic clamping apparatus, in particular for the machining of the guide surface (16).

2. A transfer system in accordance with claim 1,
**characterized in that**
the fixing means (12) is areal.

3. A transfer system in accordance with claim 1 or claim 2,
**characterized in that**
the fixing means (12) is attached to at least one outer side of the guide rail (10).

4. A transfer system in accordance with claim 3,
**characterized in that**
the fixing means (12) defines a contact plane spaced apart from the outer side of the guide rail (10).

5. A transfer system in accordance with at least one of the preceding claims,
**characterized in that**
a respective at least one fixing means (12) is provided at two outer sides of the guide rail (10) which are in particular arranged inclined with respect to one another.

6. A transfer system in accordance with at least one of the preceding claims,
**characterized in that**
the guide rail (10) engages around the slide (20) at least partly from the outside; or **in that** the slide (20) engages around the guide rail (10) at least partly from the outside.

7. A transfer system in accordance with at least one of the preceding claims,
**characterized in that**
at least one fixing means (12) is let into a groove which is preferably trapezoidal.

8. A transfer system in accordance with at least one of the preceding claims,
**characterized in that**
the fixing means (12) is formed from a ferromagnetic or ferrimagnetic material, preferably steel or iron.

9. A transfer system in accordance with at least one of the preceding claims,
**characterized in that**
the bearing (22) comprises at least one roller element bearing, in particular in the manner of a ball guide.

10. A method of machining a transfer system for the transport of objects, in accordance with at least one of the preceding claims, comprising:
providing a guide rail (10) which comprises a light metal base body (18) and a magnetic fixing means (12) which enables a temporary fastening of the guide rail (10) by means of a magnetic clamping apparatus;
fixing the guide rail (10) in or at a machining apparatus by means of the magnetic clamping apparatus;
machining the guide rail (10), in particular a guide element (14) provided for supporting a slide (20) at the guide rail (10); and
releasing the guide rail (10).

11. A method in accordance with claim 10,
wherein the machining comprises grinding a guide surface (16) of the guide element (14).

12. A method in accordance with claim 10 or claim 11,
wherein the machining comprises an introduction of the guide element (14) into the guide rail (10), in particular by rolling in or by adhesive bonding.

13. A method in accordance with claim 10, claim 11 or claim 12,
wherein the fixing of the guide rail (10) is carried out by means of an electromagnet of the magnetic clamping apparatus.

## Revendications

1. Système de transfert pour transporter des objets, comportant :
un rail de guidage (10) qui comprend un corps de base (18) en métal léger et au moins un élément de guidage (14) relié au corps de base (18) en métal léger et présentant une surface de guidage (16),
un chariot (20) pour recevoir au moins un objet, et
un palier (22) qui coopère avec l'élément de guidage (14) et qui maintient le chariot (20) de façon linéairement mobile en translation sur le rail de guidage (10),
**caractérisé en ce que**
le rail de guidage (10) comprend en supplément au moins un moyen de fixation (12) magnétique qui permet une fixation temporaire du rail de guidage (10) à l'aide d'un dispositif de serrage magnétique, en particulier pour le traitement de la surface de guidage (16).

2. Système de transfert selon la revendication 1,
**caractérisé en ce que**
le moyen de fixation (12) est réalisé sous forme surfacique.

3. Système de transfert selon la revendication 1 ou 2,
**caractérisé en ce que**
le moyen de fixation (12) est monté sur au moins une face extérieure du rail de guidage (10).

4. Système de transfert selon la revendication 3,
**caractérisé en ce que**
le moyen de fixation (12) définit un plan d'appui espacé de la face extérieure du rail de guidage (10).

5. Système de transfert selon l'une au moins des revendications précédentes,
**caractérisé en ce que**
il est prévu au moins un moyen de fixation (12) respectif sur deux faces extérieures du rail de guidage (10) qui sont agencées en particulier de façon inclinée l'une par rapport à l'autre.

6. Système de transfert selon l'une au moins des revendications précédentes,
**caractérisé en ce que**
le rail de guidage (10) entoure le chariot (20) au moins partiellement depuis l'extérieur, ou **en ce que**
le chariot (20) entoure le rail de guidage (10) au moins partiellement depuis l'extérieur.

7. Système de transfert selon l'une au moins des revendications précédentes,
**caractérisé en ce que**
au moins un moyen de fixation (12) est noyé dans une gorge qui est réalisé de préférence en forme trapézoïdale.

8. Système de transfert selon l'une au moins des revendications précédentes,
**caractérisé en ce que**
le moyen de fixation (12) est réalisé en un matériau ferromagnétique ou ferrimagnétique, de préférence en acier ou en fer.

9. Système de transfert selon l'une au moins des revendications précédentes,
**caractérisé en ce que**
le palier (22) comprend au moins un palier à roulement, en particulier du type guidage à recirculation de billes.

10. Procédé de traitement d'un système de transfert pour transporter des objets selon l'une au moins des revendications précédentes, comprenant :
- la fourniture d'un un rail de guidage (10) qui comprend un corps de base (18) en métal léger et un moyen de fixation (12) magnétique qui permet une fixation temporaire du rail de guidage (10) à l'aide d'un dispositif de serrage magnétique,
la fixation du rail de guidage (10) dans ou sur un dispositif de traitement à l'aide du dispositif de serrage magnétique,
le traitement du rail de guidage (10), en particulier d'un élément de guidage (14) prévu pour monter un chariot (20) sur le rail de guidage (10), et
- le détachement du rail de guidage (10).

11. Procédé selon la revendication 10,
dans lequel
le traitement comprend un ponçage d'une surface de guidage (16) de l'élément de guidage (14).

12. Procédé selon la revendication 10 ou 11,
dans lequel
le traitement comprend une intégration de l'élément de guidage (14) dans le rail de guidage (10), en particulier par laminage ou par collage.

13. Procédé selon la revendication 10, 11 ou 12,
dans lequel
la fixation du rail de guidage (10) est effectuée à l'aide d'un électroaimant du dispositif de serrage magnétique.
